# EUROPEAN PATENT APPLICATION

(11) **EP 4 311 261 A1**
(43) Date of publication of application: **24.01.2024**
(21) Application number: 23150388.9
(22) Date of filing: 05.01.2023
(51) Int. Cl.: H04R 1/10, H04R 25/00, G06F 1/16, G06F 3/01

(54) **USING TAP GESTURES TO CONTROL HEARING AID FUNCTIONALITY**

(71) Applicant: Oticon A/S, 2765 Smørum (DK)
(72) Inventor: EKSTRAND, Amalie Sofie, DK-2200 København N (DK); WESTERGAARD, Morten, DK-2765 Smørum (DK); WESTERGREN, Nicolai, DK-2765 Smørum (DK); BHUIYAN, Tanveer, DK-2765 Smørum (DK)
(74) Representative: Demant

(57) **Abstract**

A method, in particular performed by at least one hearing device, a hearing device, a binaural hearing system, a hearing system, and a computer program are disclosed. The method comprises: detecting at least one first motion signal of at least one hearing device; pre-processing the at least one first motion signal for obtaining at least one first pre-processed signal based on the motion signal; determining the amplitude and duration of the at least one first pre-processed signal; and determining at least one tap gesture based on the amplitude and duration of the first pre-processed signal.

## Description

### FIELD

The present disclosure generally relates to a method performed by at least one hearing device for detecting a tap gesture, to a hearing device, in particular a hearing aid, to a binaural hearing system comprising a first and a second hearing device, in particular a first and a second hearing aid, to a hearing system comprising at least one hearing device, in particular at least one hearing aid, and at least one mobile device connected with the hearing device, and to a computer program.

### BACKGROUND

Hearing devices are subject to particularly high requirements, especially in terms of comfort, appearance, size, robustness, etc. In general, it is desired that such devices can be worn on a daily basis and are practically invisible or at least can be hidden behind or in the earlobe. It is known to provide hearing devices with a relatively small housing and correspondingly small buttons for controlling diverse functions of the hearing device. However, a fair portion of persons equipped with hearing devices are elderly or physically disabled, and with age and/ or disablement, the dexterity is deteriorated, making it hard to interact with the hearing device using the small buttons. One way to alleviate this challenge is by allowing the user to interact with the hearing device by tapping the instrument.

However, the manner a user performs a tap can vary greatly, especially in terms of force, making it difficult to detect a tap that should be considered as such, e.g., for a predetermined command, while sorting out detected other activities and/or sounds. Dexterity may be affected while doing multiple activities at the same time, e.g., tapping while walking. The working memory of the hearing device is then allocated to both walking and tapping, bringing the precision of the tap down which may result in a decrease in tap detection accuracy. Moreover, spurious taps may be triggered by physical activity or actions such as scratching the ear or putting on or off a hat or glasses. Such spurious taps increase the possibility of false tap detection and cause significant discomfort for the users if the tap function is a handle for program change, phone pick up, volume change etc. In those cases, false positives would annoy the users significantly.

Against this background, it is an object of the present invention to provide a method for detecting a tap gesture which improves the user experience of the hearing device user by allowing reliable recognition of a tap gesture for performing an intended command of at least on functionality of the hearing device. Moreover, it is an object of the present invention to provide advantageous hearing devices, binaural hearing systems, hearing systems and computer programs.

### SUMMARY

According to a first aspect, the above-mentioned object is solved by a method for detecting a tap gesture. The method may comprise detecting at least one first motion signal of at least one hearing device. Detecting at least one first motion signal may comprise detecting at least one first movement and/or acceleration of the at least one hearing device. A "movement" may refer to a motion of the hearing device, in particular a change of position with respect to space and time. "Acceleration" may refer to the rate of change of the velocity of the hearing device with respect to time. Acceleration may be a vector quantity having a magnitude and direction. The term "movement and/or acceleration" may include both linear and angular position, velocity and acceleration. Thus, "movement and/or acceleration" may include position, orientation as well as the first and second derivative (e.g. with respect to time) of these. In particular, the method may comprise detecting at least one first motion signal of at least one sensor comprised by at least one hearing device.

The at least one first motion signal may comprise a tapping signal e.g. from a sensor configured to detect a change in acceleration of the hearing device. A tap gesture is generally a movement or detection of a movement that is used to express an intent or trigger an operation to be performed. The tapping gesture can e.g. be a single tap or a double tap of an ear or a hearing device in contact with the ear of a hearing device user. For example, a tap gesture can be a double tap of an ear to answer a phone call.

The method for detecting a tap gesture may comprise pre-processing the at least one first motion signal for obtaining at least one first pre-processed signal based on the motion signal. Pre-processing the at least one first motion signal may comprise determining a performance index PI(t). Also, a moving average of the performance index PI(t) may be determined.

The method for detecting a tap gesture may further comprise determining the amplitude and duration of the at least one first pre-processed signal. The acceleration due to a tap may be affected by the force at which the hearing device user is tapping. The amplitude of the pre-processed signal may represent the force of a tap. Determining the amplitude and duration of the at least one first pre-processed signal may comprise determining if the amplitude of the first pre-processed signal is above a first predetermined threshold value for less than a predetermined amount of time.

The method for detecting a tap gesture may comprise determining at least one tap gesture based on the amplitude and duration of the first pre-processed signal. The amplitude of the pre-processed signal, in particular of the performance index PI(t), may exceed a predetermined threshold, e.g. PIₜₕᵣₑₛₕ. In order to qualify for a tap, the amplitude of the pre-processed signal may only exceed the predetermined threshold for a predetermined duration. For example, the amplitude of the pre-processed signal may exceed a predetermined threshold once, but only for a predetermined maximum duration to qualify for a (single) tap.

The predetermined threshold may be determined such that it is high enough so that not every acceleration is qualified as a tap. A too low threshold would cause false tap detections, e.g. caused by physical activity such as walking the stairs or by certain movements such as taking of a sweater.

On the other hand, the predetermined threshold may be determined such that the comfort of the user is still ensured. In particular, the predetermined threshold is low enough so that the user does not have to smack the ear in order to qualify for a tap gesture.

The predetermined threshold may be preset as the best performance threshold across a plurality of users. The predetermined threshold may also be tailored to a specific user, in particular the specific way of tapping of a user. It is conceivable that the predetermined threshold may be adapted by a user, e.g. via an app of a mobile device connected with the hearing device.

The method according to the first aspect may be performed by at least one hearing device.

According to a second aspect, the above-mentioned object is solved by a hearing device. The hearing device may be configured to performing a method according to the first aspect. In particular, the hearing device may at least be configured to detect at least one first motion signal of at least one hearing device; pre-process the at least one first motion signal for obtaining at least one first pre-processed signal based on the motion signal; determine the amplitude and duration of the at least one first pre-processed signal; and determine at least one tap gesture based on the amplitude and duration of the first pre-processed signal.

Alternatively or additionally, a hearing device may comprise at least one means for performing a method according to the first aspect. In particular, the hearing device may comprise at least one means to detect at least one first motion signal of at least one hearing device; pre-process the at least one first motion signal for obtaining at least one first pre-processed signal based on the motion signal; determine the amplitude and duration of the at least one first pre-processed signal; and determine at least one tap gesture based on the amplitude and duration of the first pre-processed signal.

A hearing device (or hearing instrument, hearing assistance device) may be or include a hearing aid, a listening device or an active ear-protection device that is adapted to improve, augment and/or protect the hearing capability of a user by receiving an acoustic signal from a user's surroundings, generating a corresponding audio signal, possibly modifying the audio signal and providing the possibly modified audio signal as an audible signal to at least one of the user's ears. 'Improving or augmenting the hearing capability of a user' may include compensating for an individual user's specific hearing loss.

A "hearing device" may further refer to a device such as a hearable, an earphone or a headset adapted to receive an audio signal electronically, possibly modifying the audio signal and providing the possibly modified audio signals as an audible signal to at least one of the user's ears. Such audible signals may be provided in the form of an acoustic signal radiated into the user's outer ear, or an acoustic signal transferred as mechanical vibrations to the user's inner ears through bone structure of the user's head and/or through parts of the middle ear of the user or electric signals transferred directly or indirectly to the cochlear nerve and/or to the auditory cortex of the user.

In particular, the method according to the first aspect may be performed by at least one hearing aid. The hearing aid device may be any type of hearing aid device including a behind-the-ear (BTE) hearing aid, an in-the-ear (ITE) hearing aid, a completely-in-canal (CIC) hearing aid, an in-the-canal (ITC) hearing aid, a receiver-in-the-ear (RITE) hearing aid. The hearing aid device may comprise a BTE part (adapted for being located behind or at an ear of a user) operationally connected to a loudspeaker (receiver) and a microphone located in an ear canal of the user.

The hearing device may be adapted to be worn in any known way. This may include i) arranging a unit of the hearing device behind the ear with a tube leading air-borne acoustic signals into the ear canal or with a receiver/loudspeaker arranged close to or in the ear canal and connected by conductive wires (or wirelessly) to the unit behind the ear, such as in a BTE type hearing aid, and/or ii) arranging the hearing device entirely or partly in the pinna and/or in the ear canal of the user such as in an ITE type hearing aid or ITC/CIC type hearing aid, or iii) arranging a unit of the hearing device attached to a fixture implanted into the skull bone such as in a Bone Anchored Hearing Aid or a Cochlear Implant, or iv) arranging a unit of the hearing device as an entirely or partly implanted unit such as in a Bone Anchored Hearing Aid or a Cochlear Implant. The hearing device may be implemented in one single unit (housing) or in a number of units individually connected to each other.

In general, a hearing device may include i) an input unit such as a microphone for receiving an acoustic signal from a user's surroundings and providing a corresponding input audio signal, and/or ii) a receiving unit for electronically receiving an input audio signal. The hearing device further includes a signal processing unit for processing the input audio signal and an output unit for providing an audible signal to the user in dependence on the processed audio signal.

The input unit may include multiple input microphones, e.g. for providing direction-dependent audio signal processing. Such directional microphone system is adapted to (relatively) enhance a target acoustic source among a multitude of acoustic sources in the user's environment and/or to attenuate other sources (e.g. noise). In one aspect, the directional system is adapted to detect (such as adaptively detect) from which direction a particular part of the microphone signal originates. This may be achieved by using conventionally known methods. The signal processing unit may include an amplifier that is adapted to apply a frequency dependent gain to the input audio signal. The signal processing unit may further be adapted to provide other relevant functionality such as compression, noise reduction, etc. The output unit may include an output transducer such as a loudspeaker/ receiver for providing an air-borne acoustic signal transcutaneously or percutaneously to the skull bone or a vibrator for providing a structure-borne or liquid-borne acoustic signal. In some hearing devices, the output unit may include one or more output electrodes for providing the electric signals such as in a Cochlear Implant.

According to a third aspect, the above-mentioned object is solved by a binaural hearing system comprising a first and a second hearing device. In particular, the binaural hearing system may comprise a first and a second hearing aid. A "binaural hearing system" may refer to a system comprising two hearing devices where the devices are adapted to cooperatively provide audible signals to both of the user's ears.

The first and the second hearing device may be configured to and/or comprise at least one means for performing a method according to the first aspect. The binaural hearing system may be configured and/or comprise at least one means to determine if a motion signal is detected by only one of the hearing devices or if both hearing devices detect motion signals substantially simultaneously. During normal operation of the first and second hearing device in the binaural hearing system, both first and second hearing devices may be adapted to transmit information on detected motion signals to the respective other hearing device so that the determination of a tap gesture may depend on a combination of detected motion signals in one hearing device and information being received from the other hearing device.

Detecting a first and a second motion signal of a first and a second hearing device at least substantially simultaneously may allow for identifying scenarios where a trigger happens to both hearing devices at the same time. For example, this could be the case if the user is putting on glasses or a hat and thus touching both hearing devices simultaneously. Such a scenario, because it happens binaurally, may thus be identified as not qualifying for a true tap and instead be classified as a false tap. A true tap may only be determined if either one of the hearing devices detects a corresponding motion signal, but if something happens binaurally, noise may be identified and the event and thus false detections may be canceled or ignored.

According to a fourth aspect, the above-mentioned object is solved by a hearing system comprising a hearing device and at least one mobile device. The mobile device may be connected with the hearing device. A "hearing system" may refer to a system comprising one or two hearing devices. The at least one hearing device may be configured to and/or comprise at least one means for performing a method according to the first aspect. In particular, the hearing device may be a hearing device according to the second aspect.

The binaural hearing system according to the third aspect and/or the hearing system according to the fourth aspect may include at least one mobile device that communicates with the at least one hearing device, the mobile device affecting the operation of the hearing device and/or benefitting from the functioning of the hearing device. A wired or wireless communication link between the at least one hearing device and the mobile device may be established that allows for exchanging information (e.g. control and status signals, possibly audio signals) between the at least one hearing device and the mobile device.

The at least one hearing device may comprise a wireless interface adapted to communicate with at least one external mobile device. The wireless interface may include one or more antennae and/or inductive coils for communicating at an appropriate frequencies, e.g. around 2.4 GHz or lower frequencies for the inductive communication, e.g. around 500 MHz. Having different types of antenna allows for communication at multiple frequencies, e.g. one type for communicating between devices positioned at respective opposite ears and one type for communicating with external devices. The communication may be conducted using protocols such as Bluetooth or proprietary protocols, or even a mix of protocols.

A mobile device may include at least one of a remote control, a remote microphone, an audio gateway device, a wireless communication device, e.g. a mobile phone, such as a smartphone, or a tablet or another device, e.g. comprising a graphical interface, a public-address system, a car audio system or a music player, or a combination thereof. The audio gateway may be adapted to receive a multitude of audio signals such as from an entertainment device like a TV or a music player, a telephone apparatus like a mobile telephone or a computer, e.g. a PC. The mobile device may further be adapted to, e.g. allow a user to, select and/or combine an appropriate one of the received audio signals, or combination of signals, for transmission to the at least one hearing device. The remote control is adapted to control functionality and/or operation of the at least one hearing device. The function of the remote control may be implemented in a smartphone or other, e.g. portable, electronic device, the smartphone / electronic device possibly running an application (App) that controls functionality of the at least one hearing device.

Finally, according to a fifth aspect, the above-mentioned object is solved by a computer program comprising instructions which, when executed by a device, cause the device to perform the method according to the first aspect.

The functions may be stored on or encoded as one or more instructions or code on a tangible computer-readable medium. The computer readable medium may include computer storage media adapted to store a computer program comprising program codes, which when run on a processing system causes the data processing system to perform at least some (such as a majority or all) of the steps of the method according to the first aspect.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

A data processing system comprising a processor may be adapted to execute the computer program for causing the processor to perform at least some (such as a majority or all) of the steps of the method according to the first aspect.

It has been found that with the subject-matter according to the different aspects, a user can easily and inconspicuously provide intended feedback to a hearing device. For example, operation of the hearing device and/or a connected mobile device can be controlled upon this feedback. Tapping of the user may be detected and e.g. change operation of the hearing device and/or a connected mobile device.

The subject-matter according to the different aspects of the present disclosure allows the user to control operation of the hearing device and/or a connected mobile device just by tapping on an ear or the hearing device. In particular, the subject-matter allows for detecting tap gestures and utilizing these for controlling hearing device operation. Different functionalities may be associated with different tap gestures. In particular for small custom designs of hearing devices, the recognition based on the analysis of detected motion signals according to the present disclosure allows for increasing the possibilities for commanding functions of a hearing device. Also with the invention, a hearing device, in particular a hearing aid, can be provided without any buttons, while having improved user interface effect by means of a robust tap detection. Overall, the tap detection disclosed herein permits increasing the number of user interface handles.

Exemplary embodiments of the first, second, third, fourth and/or fifth aspect may have one or more of the properties described below. The individual features are in each case individually applicable to the method, the hearing device, the binaural hearing system, the hearing system and the computer program. The individual features may furthermore be combined with each other.

Determining the tap gesture may comprise determining a true tap if the amplitude of the at least one first pre-processed signal is above a first predetermined threshold value for less than a predetermined amount of time. A true tap may cause controlling or triggering control of at least one functionality of the at least one hearing device and/or a connected mobile device.

Determining the tap gesture may also comprise determining a false tap if the amplitude of the at least one first pre-processed signal is below the first predetermined threshold value or if the amplitude of the at least one first pre-processed signal is above the first predetermined threshold value for more than a predetermined amount of time. In either case, the tap gesture may be identified as a false tap. Operation of the hearing device and/or a connected mobile device may then remain unchanged.

The method may comprise determining a double tap time interval. A double tap time interval may also be referred to as a double tap window. A double tap may be identified if a predetermined threshold is exceeded twice. In particular, a double tap may be identified if two true taps are determined within the double tap time interval. For example, the double tap time interval may last for 0,5 seconds.

The method may comprise determining a first true tap based on the amplitude of the at least one first pre-processed signal being above the first predetermined threshold value for less than a predetermined amount of time. The double tap time interval may start based on the amplitude of the first pre-processed signal exceeding the first predetermined threshold value. The method may further comprise detecting at least one further motion signal of the at least one hearing device, pre-processing the at least one further motion signal for obtaining at least one further pre-processed signal based on the further motion signal, determining that the amplitude of the at least one further pre-processed signal is above a further predetermined threshold value for less than a predetermined amount of time within the double tap time interval, and determining at least one further true tap based on the amplitude of the at least one further pre-processed signal being above the further predetermined threshold value for less than the predetermined amount of time within the double tap time interval. The further predetermined threshold value may be the same as the first predetermined threshold value or different from the first predetermined threshold value.

A double tap may trigger a specific event to occur. In particular, a double tap may trigger an event different from an event triggered by a single tap. For example, a single tap may increase the volume of a hearing device, while a double tap may decrease the volume of a hearing device, or vice versa. In case of a call incoming on a mobile device connected to the hearing device, a single tap may decline the call, while a double tap may accept the call, or vice versa.

The further predetermined threshold value may be less than the first predetermined threshold value by a hysteresis decay factor. The benefit of a double tap is that it is more reliable than a single tap in terms of false positives. The flipside to that is that it is relatively harder to achieve than a single tap, hence more false negative prone. In order to detect a double tap, the tap force needs to exceed the predetermined threshold twice within a given double tap time interval, compared to only once in a single tap. Given a predetermined threshold is set, the first tap in a double tap may exceed the predetermined threshold, but a second tap may not achieve that threshold, resulting in a false negative irritating and reducing the comfortability of the user.

Hysteresis is a method that depends on the state of a system in its history. After exceeding the predetermined threshold initially, the further threshold may be decreased. Providing that the further threshold value may be less than the first predetermined threshold value by a hysteresis decay factor allows for the second tap of a double tap to be detected as a tap even if the amplitude might be lower, e.g. due to a lower applied force. As people naturally tend to tap with reduced force for the second tap, the method allows for false negative reduction in double tap detection. This allows more freedom in terms of the acceleration force produced in the double tap and will improve the user experience and generally increase the trust in the performance of the method for detecting a tap gesture by reducing false negatives.

The threshold may be reset to its original value after a double tap time interval has exceeded.

The method may further comprise determining that the amplitudes of more than two pre-processed signals are above the first predetermined threshold value and/or the further predetermined threshold value for less than the predetermined amount of time within the double tap time interval. However, only single or double taps may be intended and associated to handles of the hearing device or a connected mobile device. Accordingly, if more than two tap gestures are detected within a double tap time interval, a penalty may be introduced. The method may comprise suspending detecting motion signals, pre-processing motion signals, determining the amplitude and duration of the pre-processed signals and/or determining tap gestures for a predetermined penalty time. For example, motion signals and/or tap gestures may be ignored for 1.2 seconds to avoid false detections.

Pre-processing the at least one motion signal may comprise processing the at least one motion signal of the at least one hearing device in three individual channels representing three spatial dimensions x', y', z' of the at least one hearing device. In particular, the three individual channels may represent the three spatial dimensions x', y', z' of at least one sensor comprised by the at least one hearing device.

The method may comprise calibrating the orientation of the three spatial dimensions x', y', z' of the at least one hearing device to a standardized orientation of the head of a user wearing the at least one hearing device. Calibrating the orientation of the three spatial dimensions x', y', z' to a standardized orientation may allow for taking into account the direction of the incoming force of an alleged tap gesture. In particular, an absolute acceleration may be determined for each axis.

Determining the amplitude and duration of the pre-processed signal may comprise determining the amplitude and duration of the pre-processed signal in at least one of the calibrated spatial dimensions x, y, z of the at least one hearing device. In particular, the amplitude and duration of the pre-processed signal in at least one of the calibrated spatial dimensions x, y, z of the at least one sensor comprised by the at least one hearing device may be determined. Looking into data in specific axes may allow for investigating if certain actions represent a tap or an artefact making the method for detecting a tap gesture more robust.

Users may be required to adapt to a specific tapping style which is according to a normal learning effect. Users can be instructed in the fitting session on how to tap instead of allowing them to tap complexly free. This will improve the user experience and increase the trust of robustness in the technology, by reducing false predictions.

Calibrating the orientation of the three spatial dimensions x', y', z' may comprise calibrating the directions of the three spatial dimensions x', y', z' such that each calibrated spatial dimension x, y, z corresponds to a standardized direction X, Y, Z relative to the standardized orientation of the head of the user.

Calibrating the orientation of the three spatial dimensions x', y', z' may comprise determining a rotation matrix R based on a placement angle *θ* of the hearing device, and applying the rotation matrix R to the three spatial dimensions x', y', z' in order to obtain the calibrated spatial dimensions x, y, z. The rotation matrix R may preferably be determined based on a placement angle *θ* of the at least one sensor comprised by the at least one hearing device. Generally, hearing devices may be mounted in different ways, based on the shape of people's ears, speaker length, style of the hearing device, etc. The z' axis of the hearing device, in particular a sensor comprised by the hearing device, is often not oriented along the gravity vector. Applying the rotation matrix R may allow for a mathematically rotated hearing device frame, in particular for aligning the z' axis with the gravity vector.

The rotation matrix R may be calculated by estimating the initial orientation of the hearing device, in particular a sensor comprised by the hearing device. Estimating the initial orientation may be performed according to Three-axis attitude determination from vector observations published in the Journal of Guidance, Control, and Dynamics by M. D. Shuster and S. D. Oh. Taking the inverse of the rotation matrix R would then enable the axis of the hearing device, in particular the sensor, to be aligned with Z axis.

It is to be noted that applying the initial orientation does not change the norm of the acceleration, just the frame of the acceleration is rotated. In particular, the rotation matrix has no impact on the amplitude of the signal. Hence, applying the rotation matrix R allows for analyzing the component of tap-forces on each axis.

An individualized rotation matrix R may be determined by measuring movement and/or acceleration data of a hearing device worn by a hearing device user while the hearing device user is sitting still and looking to the front and calculating the rotation matrix of the hearing device based on this measured data. This may allow for an individualized rotation matrix for an individually worn hearing device. For example, the movement and/or acceleration data may be measured for a certain period of time such as e.g. 10 ms.

Alternatively, the rotation matrix R may be a standardized rotation matrix based on average data across a plurality of hearing device users. It may be assumed that the hearing device is fitted in a conventional way, e.g. like known from data of a plurality of hearing device users, e.g. 60 different hearing device users.

A different rotation matrix may be calculated for each hearing device of a binaural hearing system.

Determining the amplitude of the pre-processed signal may comprise subtracting the amplitude of at least one of the calibrated spatial dimensions x, y, z from the pre-processed signal. In particular, determining the amplitude of the pre-processed signal may comprise subtracting the amplitude of the calibrated spatial dimension z from the pre-processed signal. Generally, hearing device users may tap from a direction substantially perpendicular to the ear. In particular, the hearing device users may be instructed to tap from a direction substantially perpendicular to the ear.

Any activity along the z axis, which would trigger a tap may thus not be an intended tap. Rather, any impact coming from the top of the hearing device, i.e. along the z axis of the hearing device, may be considered noise, e.g. putting on glasses or a sweatshirt. To circumvent this issue, where unintended action triggers a tap, a tap gesture may be qualified by looking into the axis where the tap activity is not meant to be, e.g. the z axis. A true tap may be distinguished from a false tap by analyzing the impact in the z axis in the event of a tap gesture. This allows for detecting any false positives and disqualify these as a tap. The false positives in the tap may thus be significantly reduced.

Determining the amplitude of the pre-processed signal may comprise reducing the amplitude of at least one of the calibrated spatial dimensions x, y, z of the pre-processed signal. In particular, determining the amplitude of the pre-processed signal may comprise reducing the amplitude of the calibrated spatial dimension z of the pre-processed signal. Different weighing for the respective axes may allow for adapting tap sensitivity according to the context. In particular, it may be considered that tapping should not have any impact on the amplitude of the pre-processed signal in the z axis.

The method may further comprise determining a level of physical activity of the user wearing the hearing device, and adapting the amplitude of the pre-processed signal in at least one of the calibrated spatial dimensions x, y, z depending on the determined level of physical activity. The tap sensitivity may thus be adapted according to physical activity of the hearing device user. By allowing the amplitude of the pre-processed signal being adapted to the situation of physical activity, the overall performance could be improved.

Adapting the amplitude of the pre-processed signal in at least one of the calibrated spatial dimensions x, y, z may comprise reducing the amplitude of the pre-processed signal in the calibrated spatial dimension z and/or increasing the amplitude in the calibrated spatial dimension x and/or y. Physical activity is primarily reflected in the z axis. In particular, activities such as e.g. running may cause a lot of up and down movements and thus acceleration in the z axis. Hence, just adapting the overall threshold would allow for more false positives. If physical activity such as e.g. walking, running, biking, etc., is detected, tap sensitivity may be adapted by changing the weighing of the accelerometer signal, which is in particular achieved by weighing the z axis less and/or weighting the x and/or y axis more.

The method may further comprise detecting at least a first and a second motion signal of the at least one hearing device, determining at least a first and a second pre-processed signal based on the first and second motion signals, determining the amplitudes and durations of the first and second pre-processed signals, and adapting the predetermined threshold value for the amplitude of the second pre-processed signal based on the amplitude of the first pre-processed signal. By allowing the predetermined threshold value being adapted to the amplitude of the pre-processed signals, the tap sensitivity may be personalized and the overall performance may thus be improved.

For example, a hearing device user may consistently tap in a manner that results in a high amplitude. By slowly allowing the predetermined threshold value to increase over time, the number of false taps would go down while maintaining the level of comfort. On the other hand, if a hearing device user is consistently tapping gently, the number of false negatives may be high and allowing for the predetermined threshold value to be lowered would bring the false negatives down.

Taps may be used to update the predetermined threshold value over time. The predetermined threshold value may be updated, e.g., as a moving average or IIR filter over past tap peak amplitudes. The method thus allows for adapting to the user, thus improving the overall performance. For example, the moving average may be determined e.g. as the average over the last 20 taps or the last 30 taps, etc. The average may be determined e.g. once per day or every ten taps. A forgetting factor may be taken into consideration such that memory usage may be reduced.

The method may comprise determining if the amplitude of the pre-processed signal is above the current predetermined threshold value. If so, the tap elicits the defined tap action. Moreover, the predetermined threshold value may be updated.

Alternatively, this effect may be achieved by updating the axis weighting instead of the predetermined threshold value itself. The threshold value may stay the same, but the amplitude of the pre-processed signals from each axis may be altered.

A minimum and/or maximum threshold may be determined and the adapted predetermined threshold value does not fall below the minimum threshold and/or exceed the maximum threshold. The predetermined threshold value may be adapted to a situation or user, however, it is important to keep the predetermined threshold within a reasonable range to avoid false classification. Thus, the threshold may only be allowed to adapt within a predefined range. The range may also ensure that the threshold does not increase when non-tap activities with high amplitude acceleration trigger a tap. For example, the predetermined threshold may only be updated if the amplitude of the pre-processed signal is below the maximum threshold, so that non tap activities with high amplitudes do not increase the individual optimal predetermined threshold. The threshold may thus be set to a general derived optimal threshold and adapted from there.

The method may further comprise controlling or triggering control of at least one functionality of the at least one hearing device based on the determined tap gesture. Controlling or triggering control of at least one functionality of the hearing device may comprise changing a program and/or changing volume of the hearing device. A program and/or volume change of the hearing device may be controlled and/or regulated by tap gestures such as e.g. a single or a double tap.

Alternatively or additionally, the method may comprise controlling or triggering control of at least one functionality of a connected mobile device based on the determined tap gesture. Controlling or triggering control of the connected mobile device may comprise answering or rejecting a phone call. For example, a single tap on the hearing device housing may be used to answer or reject a phone call. A detected tap may e.g. be used to control a wirelessly connected smartphone. Single tapping may e.g. be used to accept an incoming phone call, and/or double tapping may e.g. be used to reject a phone call.

In particular, the method may comprise controlling or triggering control of at least one functionality of the at least one hearing device and/or the connected mobile device based on the determined at least one true tap. A single or double tap may be determined, triggering a specified event to occur. It may be noted that the specific handle is not important. When at least one true tap is determined, the handle could be anything in terms of the idea.

The method may comprise detecting a first motion signal of a first hearing device, detecting a second motion signal of a second hearing device, and determining a false tap if the first motion signal and the second motion signal are detected at least substantially simultaneously. The first and the second hearing device may be positioned at respective ears of a user und thus be part of a binaural hearing system. Detecting the first and the second motion signal of the first and the second hearing at least substantially simultaneously allows for identifying scenarios where a trigger happens to both hearing devices at the same time. For example, this could be the case if the user is putting on glasses or a hat and thus touching both hearing devices simultaneously. Such a scenario, because it happens binaurally, may thus be identified as not qualifying for a true tap and instead be classified as a false tap. A true tap may only be determined if either one of the hearing devices detects a corresponding motion signal, but if something happens binaurally, noise may be identified and the event and thus false detections may be canceled or ignored. Spurious triggers occurring on both ears may thus be eliminated by using binaural synchronization between hearing devices on each ear.

The hearing device may comprise at least one sensor for detecting at least one motion signal of the hearing device. In particular, the hearing device may comprise at least one sensor for detecting at least one movement and/or acceleration of the hearing device. The sensor may provide information about physical impacts on the hearing device and detect if the hearing device user performs tap gestures on the hearing device. The sensor may be any suitable type of sensor capable of detecting movement and/or acceleration of the hearing device. The sensor may be an integrated part of the hearing device or be attached to the hearing device in any suitable way. The sensor used may be adapted to sense the hearing device being moved and/or accelerated in one, two or three axis and may generate a corresponding motion signal. Using the sensor allows the user to control operation of the hearing device and/or a connected mobile device by tapping on the hearing device.

It may be beneficial that the sensor is or comprises an accelerometer. An accelerometer is a sensor that detects its own acceleration. This is usually done by determining the inertial force acting on a test mass. In this way, it can be determined, for example, whether an increase or decrease in speed is taking place. An accelerometer may detect if the user is tapping on the hearing device, in particular a hearing device housing, which may be done inconspicuously.

The accelerometer may be an accelerometer configured to measure linear acceleration in one, two or three directions. An accelerometer may be a component designed with specific x, y and z axis relative to its housing. Designing the sensor into a hearing device can be done in ways where the axis of orientation of the sensor directly matches the axis of orientation of the hearing device, e.g. an axis defined by a 'direction of microphones', when it is placed on a person's ear. In this way no conversion of the accelerometer data is needed to achieve correct motion data, i.e. moving forward may e.g. correspond directly to the positive direction of the accelerometers x-axis. Alternatively, a fixed transformation of the data can be carried out by use of fixed spatial rotation of the axis, based on previous calculated placement of the sensors in the user situation relative to a characteristic direction of the hearing device, e.g. a direction defined by the housing of the hearing device, e.g. an outer edge of the housing. But to allow user individualization as well as allowing for free orientation of the sensors, it is advantageous to detect the sensors' placement relative to the head of the user by detecting motion data for each hearing device and to compare such data between the hearing devices. A spatial rotation matrix may be determined from the combined data, and this can be used for spatial transformation of the sensors' axis to the users current head orientation. The transformation should preferably be continuously adapting to the user's head movements.

The disclosure of a method step is to be understood to also disclose the respective means for performing the method step. Likewise, the disclosure of means for performing a method step is to be understood to also disclose the respective method step.

Further configurations and advantages of the invention will be explained in the following detailed description of some exemplary embodiments of the present invention in conjunction with the drawing.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
- Fig. 1: schematically illustrates a flow chart of a method for detecting a tap gesture according to the first aspect;
- Fig. 2: illustrates a method for detecting a tap gesture according to the first aspect comprising a double tap;
- Fig. 3: illustrates a method for detecting a tap gesture according to the first aspect comprising a double tap with hysteresis modification;
- Fig. 4: is graphical representation of a method for detecting a tap gesture with an adaptive threshold value;
- Fig. 5: is a flow chart of a method for detecting a tap gesture with an adaptive threshold value;
- Fig. 6: is a graphical representation of a method for detecting a tap gesture, where initial orientation is applied by calculating the rotation matrix R;
- Fig. 7: is a graphical representation of a method for detecting a tap gesture before and after incorporating a z axis attenuation for the non-tap event of wearing glasses;
- Fig. 8: is a graphical representation of a method for detecting a tap gesture before and after incorporating a z axis attenuation for the non-tap event of scratching; and
- Fig. 9: is a graphical representation of a method for detecting a tap gesture where first, the three axes are weighted equally and second, where the z axis is weighted less and/or the x and y axis more.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

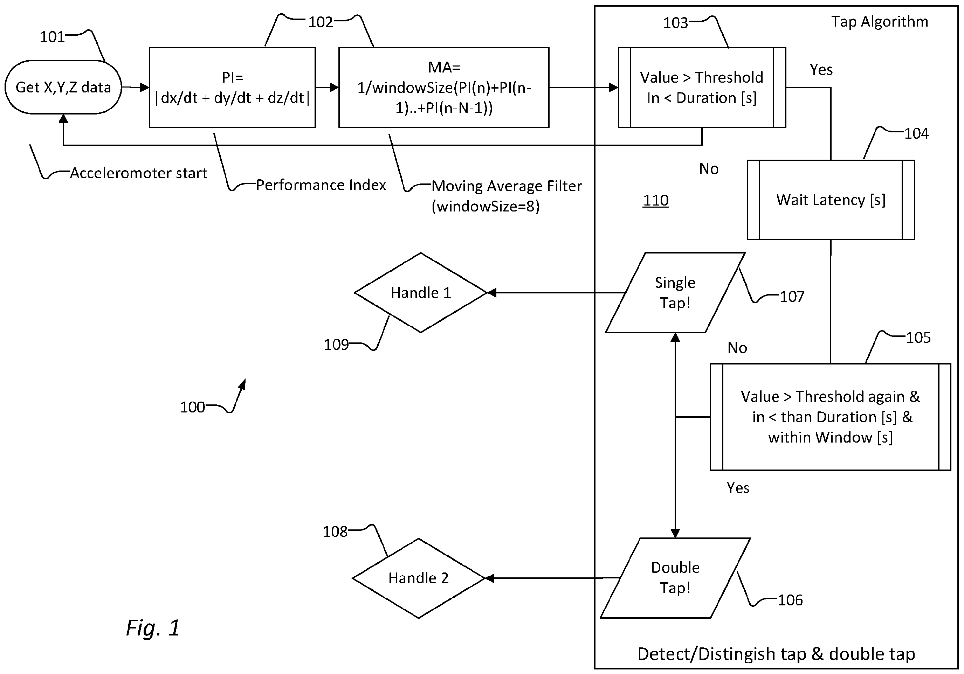

Fig. 1 represents a flow chart of a method 100 for detecting a tap gesture. In step 101, the method comprises detecting motion signals by an accelerometer comprised by a hearing device. The accelerometer detects if the hearing device is accelerated, e.g. caused by the hearing device user tapping against the housing of the hearing device. In step 102, the motion signals are pre-processed for obtaining pre-processed signals based on the motion signals.

After pre-processing the motion signals, the pre-processed signals are classified, step 110. Amplitudes and durations of the pre-processed signals are determined in step 103. In particular, it is determined if the amplitude of a pre-processed signal is above a predetermined threshold value for less than a predetermined amount of time. If that is not the case, the method starts again with step 101. On the other hand, if that is the case, the method proceeds with step 104, according to which a wait latency is considered. For example, a double tap time interval starts based on the amplitude of the pre-processed signal exceeding the predetermined threshold value. If a further motion signal is detected, the further motion signal is pre-processed and the amplitude and duration of a potential further pre-processed signal are determined in step 105. If the amplitude of the further pre-processed signal is above a further predetermined threshold value for less than a predetermined amount of time within the double tap time interval, a further true tap is determined and thus a double tap is identified, step 106. If no further motion signal is detected or if the amplitude of the further pre-processed signal is not above a further predetermined threshold value for less than a predetermined amount of time within the double tap time interval, only a single tap is identified, step 107.

A double tap may trigger a handle 2, step 108, different from a handle 1 triggered by a single tap, step 109. For example, a single tap may cause an increase of the volume of a hearing device, while a double tap may decrease the volume of a hearing device, or vice versa. In case of a call incoming on a mobile device connected to the hearing device, a single tap may decline the call, while a double tap may accept the call, or vice versa.

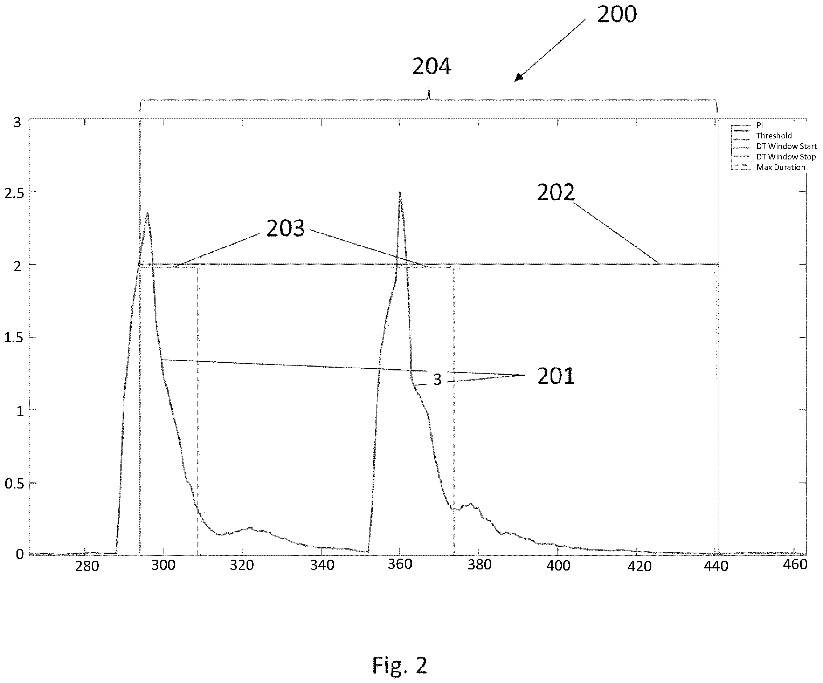

Fig. 2 is a graphical representation of a double tap 200. A single tap is determined if the amplitude of a pre-processed signal 201 exceeds a predetermined threshold value 202 only once for less than a predetermined amount of time 203. In the present case, however, the predetermined threshold value 202 is exceeded twice, within a double tap time interval 204 for less than a predetermined amount of time 203. Accordingly, a double tap is detected. The double tap time interval 204 may be up to 700 ms.

If the predetermined threshold value 202 is exceeded more than twice within the double tap time interval 204, a penalty is introduced, ignoring signals for 1.2 seconds, to avoid false detections.

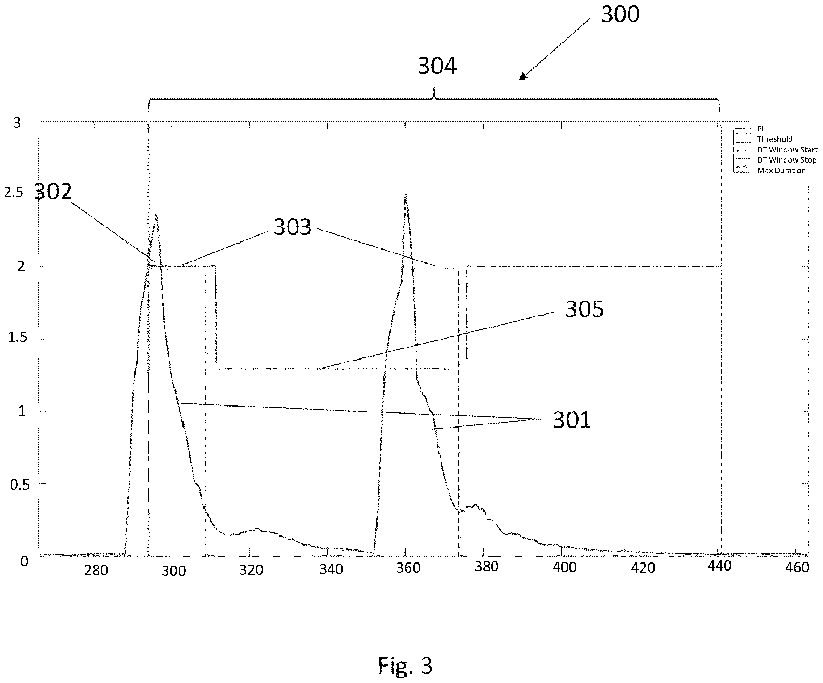

Fig. 3 is a graphical representation of a double tap 300 with hysteresis modification. After exceeding the predetermined threshold value 302 initially for less than a predetermined amount of time 303, the threshold value will be decreased to a further predetermined threshold value 305 by a hysteresis decay factor. The threshold will be back to its original value after the further predetermined threshold value 305 is exceeded, i.e. the threshold is exceed a second time, and/or the double tap time interval 304 has exceeded. After the threshold exceed a second time, or exceeds the double tap window, the threshold will go back to its original value.

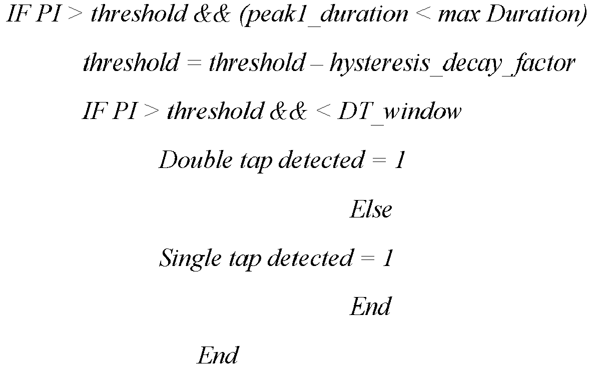

By implementing a hysteresis decay factor in the method for detecting a tap gesture, false negatives can be reduced significantly for double taps. This allows more freedom in terms of the acceleration force produced in the double tap and will improve the user experience and generally increase the trust in the performance of the method by reducing false negatives.

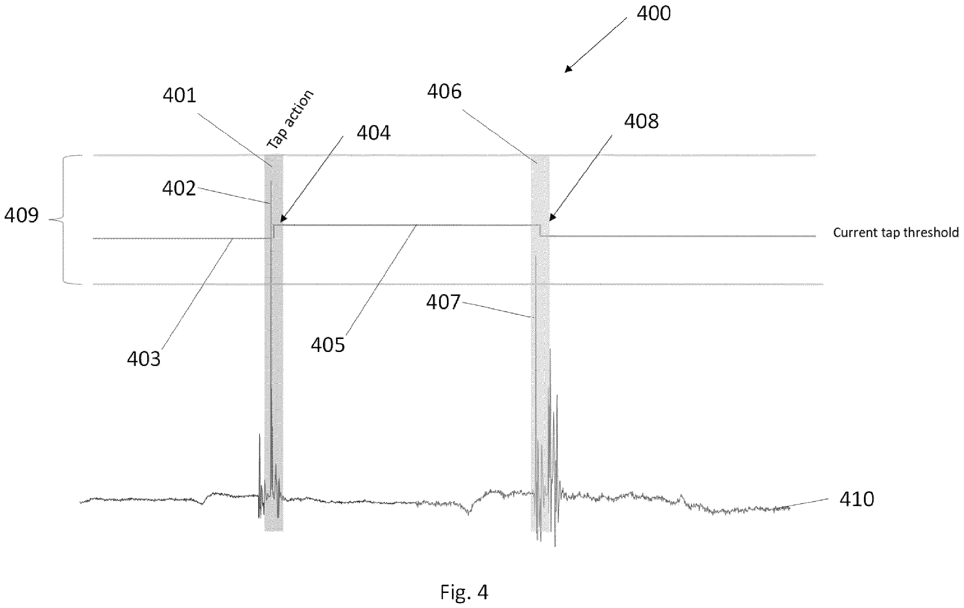

Fig. 4 is a graphical representation of a method 400 for detecting a tap gesture with an adaptive threshold value. The threshold value is updated depending on how a hearing device user is tapping. In step 401, a pre-processed accelerometer signal 410 with an amplitude 402 above the current predetermined threshold value 403 is picked up, resulting in the determination of a tap gesture, in particular a first true tap, and thus in the assigned tap action. Moreover, the amplitude of the pre-processed signal exceeding the predetermined threshold value 403 results in a small increase 404 of the threshold resulting in a further threshold value 405.

In step 406, a further pre-processed signal is detected, but as the amplitude 407 is below the further threshold value 405, it will not elicit a tap action, but only cause the threshold to be updated resulting in a decrease 408.

An allowed threshold range 409 with a minimum and maximum threshold is defined and the adapted predetermined threshold value does not fall below the minimum threshold or exceed the maximum threshold. Thus, the threshold can only be adapted within the predefined range 409.

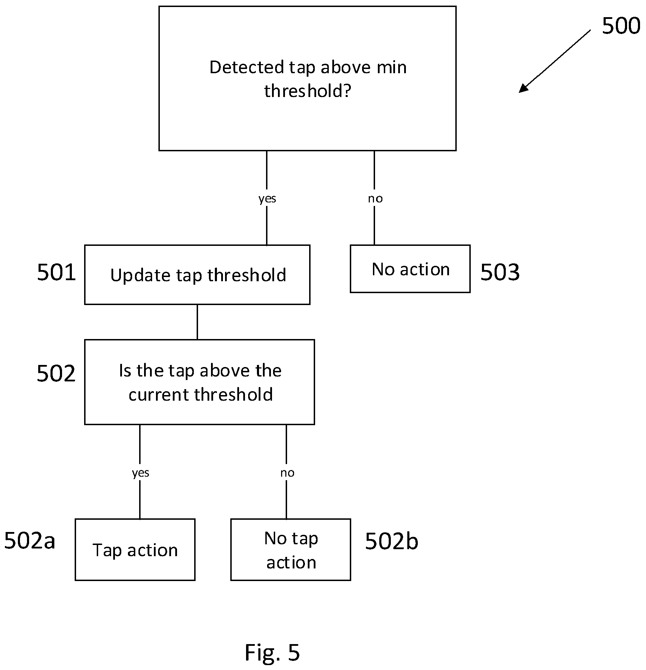

Fig. 5 is a flow chart of a method 500 for detecting a tap gesture with an adaptive threshold value indicating that when the amplitude of a pre-processed signal is above a set minimum threshold, an update of the threshold is warranted, step 501. Moreover, if the amplitude of the pre-processed signal also exceeds the current threshold value, which is determined in step 502, a tap action is performed, step 502a. However, if the amplitude stays under the current tap threshold value, step 502b, it will not result in a tap action. If the amplitude of the pre-processed signal is below the set minimum threshold, the threshold is not updated, step 503.

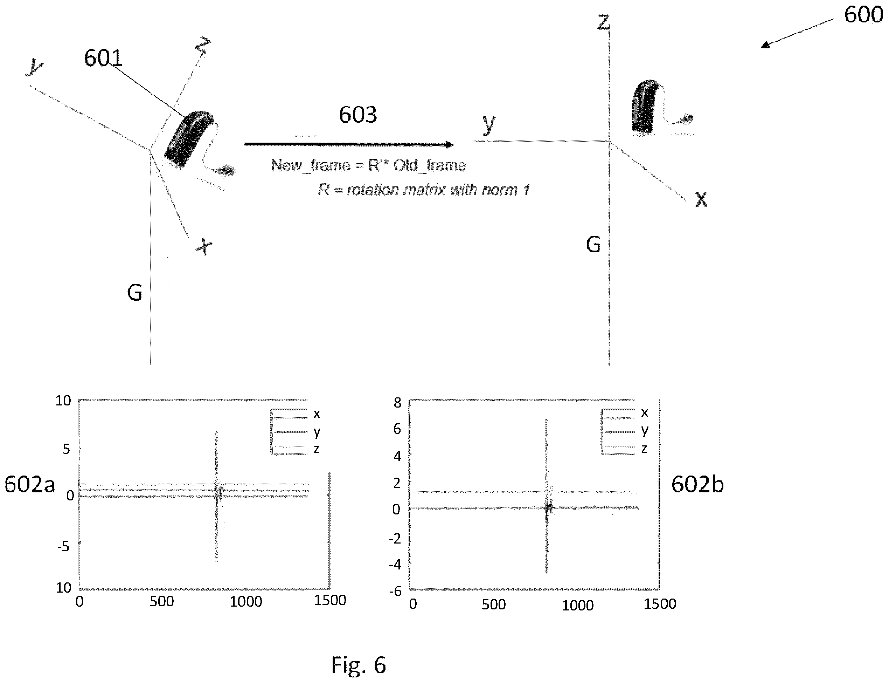

Fig. 6 is a graphical representation of a method 600 for detecting a tap gesture, where initial orientation is applied by calculating the rotation matrix R of the initial orientation of the accelerometer comprised by the hearing device 601. From the raw data in plot 602a, it can seen that, all of the x', y', z' components were non-zero, meaning that the axis of the accelerometer was inclined to the gravity vector G. After applying the initial orientation, step 603, the raw data in plot 602b are 0, 0, 1g, meaning that the accelerometer axes have been rotated now aligning the z axis of the accelerometer to the gravity vector G.

Applying the initial orientation does, however, not change the norm of the acceleration, just the frame of the acceleration is rotated.

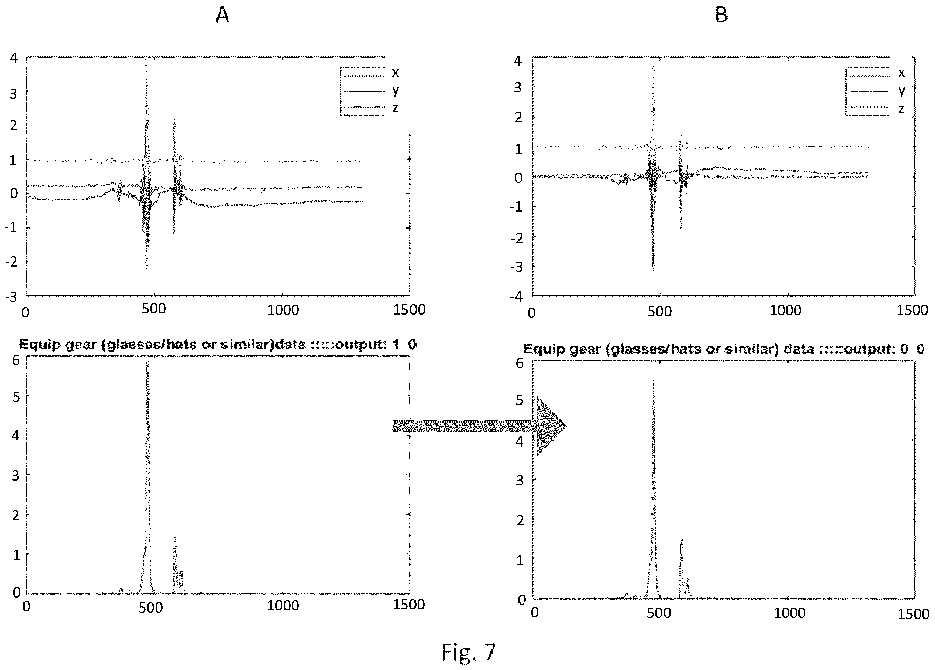

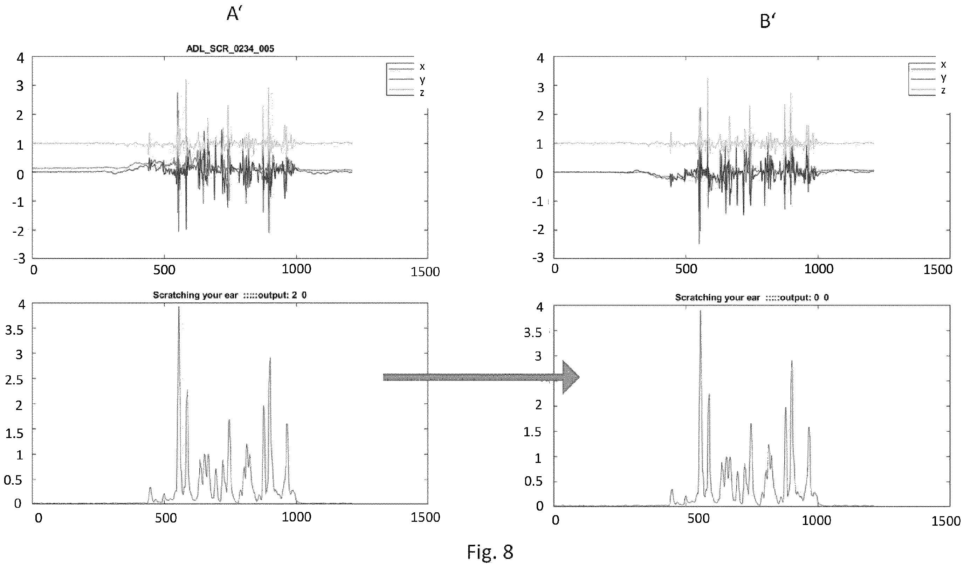

In Fig. 7 and 8, two examples of daily activities inducing false positives are shown in the respective left plots A, A'. When a hearing device user tries to scratch the ear, a tap-like event occurs which actually triggers a tap. Similar phenomenon can be observed when a pair of glasses gets equipped and detected as a tap in the hearing aid. In Fig. 7, the left plots A represent an event of wearing glasses, which is detected as a tap. In Fig. 8, the left plots A' represent an event of scratching, which is detected as two single taps.

To circumvent these issues, where some unintended action triggers a tap, a tap gesture can be classified by looking into the axis where the tap-activity is not meant to be. Generally, users are instructed to tap from a direction perpendicular to the ear. So any activity along the z axis, which triggers a tap is not an intended tap. In the method for detecting a tap gestures, this can be taken into account as follows:
- *Rotate the accelerometer frame to g vector*
- *If Z-axis activity* > *threshold*
   ∘ *TAP_detected* = *[0 0]* % No_tap_detected
- *else*
   ∘ *TAP_detected* = *use_existing_tap_detection_algorithm*

The right plots B, B' in Fig. 7 and 8 show the performance improvement of the method for detecting a tap gesture after incorporating a z axis attenuation for non-tap events, i.e. wearing glasses or scratching. After implementing the above-mentioned criteria, it can be observed that no taps were detected even though the threshold and duration criteria have been fulfilled.

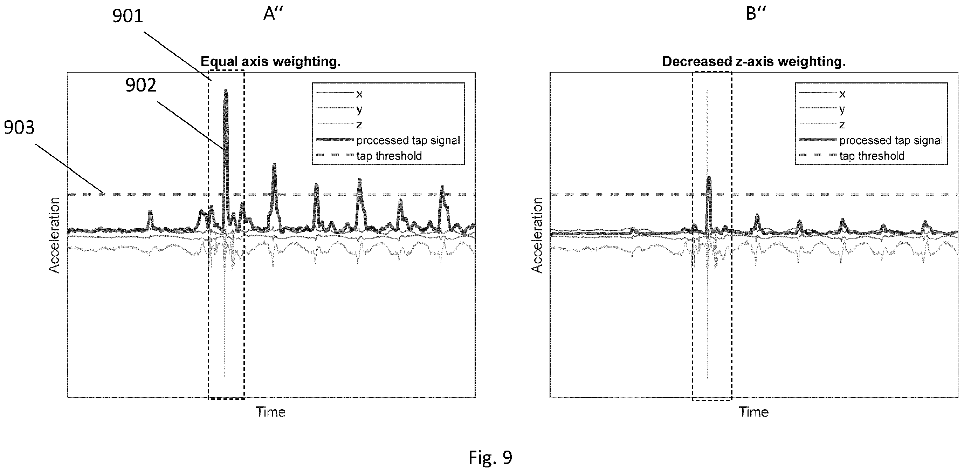

In Fig. 9, in the left plot A", a tap is shown while a hearing device user is walking, and the three axes are weighted equally. The high activity in the z axis is primarily caused by walking except for a tap, shaded area 901. The amplitude 902 of the pre-processed tap signal is above the predetermined threshold value 903 multiple times without it being a tap causing false positives.

In the right plot B", the z axis is weighted less than the two other axes. This results in only the true tap being above the tap threshold, and the impacts from walking are below the threshold.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

## Claims

1. A method for detecting a tap gesture, in particular performed by at least one hearing device, the method comprising:
- detecting at least one first motion signal of at least one hearing device;
- pre-processing the at least one first motion signal for obtaining at least one first pre-processed signal based on the motion signal;
- determining the amplitude and duration of the at least one first pre-processed signal; and
- determining at least one tap gesture based on the amplitude and duration of the first pre-processed signal.

2. The method according to claim 1, wherein determining the tap gesture comprises:
- determining a true tap if the amplitude of the at least one first pre-processed signal is above a first predetermined threshold value for less than a predetermined amount of time; or
- determining a false tap if the amplitude of the at least one first pre-processed signal is below the first predetermined threshold value or if the amplitude of the at least one first pre-processed signal is above the first predetermined threshold value for more than a predetermined amount of time.

3. The method according to claim 1 or 2, wherein the method comprises:
- determining a double tap time interval;
- determining a first true tap based on the amplitude of the at least one first pre-processed signal being above the first predetermined threshold value for less than a predetermined amount of time, wherein the double tap time interval starts based on the amplitude of the first pre-processed signal exceeding the first predetermined threshold value;
- detecting at least one further motion signal of the at least one hearing device;
- pre-processing the at least one further motion signal for obtaining at least one further pre-processed signal based on the further motion signal;
- determining that the amplitude of the at least one further pre-processed signal is above a further predetermined threshold value for less than a predetermined amount of time within the double tap time interval; and
- determining at least one further true tap based on the amplitude of the at least one further pre-processed signal being above the further predetermined threshold value for less than the predetermined amount of time within the double tap time interval.

4. The method according to claim 3, wherein the further predetermined threshold value is less than the first predetermined threshold value by a hysteresis decay factor.

5. The method according to claim 3 or 4, wherein the method comprises:
- determining that the amplitudes of more than two pre-processed signals are above the first predetermined threshold value and/or the further predetermined threshold value for less than the predetermined amount of time within the double tap time interval; and
- suspending detecting motion signals, pre-processing motion signals, determining the amplitude and duration of the pre-processed signals and/or determining tap gestures for a predetermined penalty time.

6. The method according to any one of claims 1 to 5, wherein pre-processing the at least one motion signal comprises:
- processing the at least one motion signal of the at least one hearing device in three individual channels representing three spatial dimensions x', y', z' of the at least one hearing device; and
- calibrating the orientation of the three spatial dimensions x', y', z' of the at least one hearing device to a standardized orientation of the head of a user wearing the at least one hearing device; and
wherein determining the amplitude and duration of the pre-processed signal comprises:
- determining the amplitude and duration of the pre-processed signal in at least one of the calibrated spatial dimensions x, y, z of the at least one hearing device.

7. The method according to claim 6, wherein calibrating the orientation of the three spatial dimensions x', y', z' comprises:
- calibrating the directions of the three spatial dimensions x', y', z' such that each calibrated spatial dimension x, y, z corresponds to a standardized direction X, Y, Z relative to the standardized orientation of the head of the user.

8. The method according to claim 6 or 7, wherein calibrating the orientation of the three spatial dimensions x', y', z' comprises:
- determining a rotation matrix R based on a placement angle *θ* of the hearing device; and
- applying the rotation matrix R to the three spatial dimensions x', y', z' in order to obtain the calibrated spatial dimensions x, y, z.

9. The method according to any one of claims 6 to 8, wherein determining the amplitude of the pre-processed signal comprises:
- subtracting the amplitude of at least one of the calibrated spatial dimensions x, y, z, in particular of the calibrated spatial dimension z, from the pre-processed signal.

10. The method according to any one of claims 6 to 9, wherein determining the amplitude of the pre-processed signal comprises:
- reducing the amplitude of at least one of the calibrated spatial dimensions x, y, z, in particular of the calibrated spatial dimension z, of the pre-processed signal.

11. The method according to any one of claims 6 to 10, wherein the method further comprises:
- determining a level of physical activity of the user wearing the hearing device; and
- adapting the amplitude of the pre-processed signal in at least one of the calibrated spatial dimensions x, y, z depending on the determined level of physical activity.

12. The method according to claim 11, wherein adapting the amplitude of the pre-processed signal in at least one of the calibrated spatial dimensions x, y, z comprises reducing the amplitude of the pre-processed signal in the calibrated spatial dimension z and/or increasing the amplitude in the calibrated spatial dimension x and/or y.

13. The method according to any one of claims 2 to 12, wherein the method further comprises:
- detecting at least a first and a second motion signal of the at least one hearing device;
- determining at least a first and a second pre-processed signal based on the first and second motion signals;
- determining the amplitudes and durations of the first and second pre-processed signals; and
- adapting the predetermined threshold value for the amplitude of the second pre-processed signal based on the amplitude of the first pre-processed signal.

14. The method according to claim 13, wherein a minimum and/or maximum threshold is determined and the adapted predetermined threshold value does not fall below the minimum threshold and/or exceed the maximum threshold.

15. The method according to any one of claims 1 to 14, wherein the method further comprises:
- controlling or triggering control of at least one functionality of the at least one hearing device and/or a connected mobile device based on the determined tap gesture.

16. The method according to any one of claims 1 to 15, wherein the method comprises:
- detecting a first motion signal of a first hearing device;
- detecting a second motion signal of a second hearing device; and
- determining a false tap if the first motion signal and the second motion signal are detected at least substantially simultaneously.

17. A hearing device, in particular a hearing aid, the hearing device being configured to and/or comprising at least one means for performing a method according to one of claims 1 to 16.

18. The hearing device according to claim 17, wherein the hearing device comprises at least one sensor for detecting at least one motion signal of the hearing device.

19. A binaural hearing system comprising a first and a second hearing device, in particular a first and a second hearing aid, the first and the second hearing device being configured to and/or comprising at least one means for performing a method according to claim 16.

20. A hearing system comprising a hearing device according to claim 17 or 18 and at least one mobile device.

21. A computer program comprising instructions which, when executed by a device, preferably a hearing device according to claim 17 or 18, cause the device to perform the signal processing method according to any one of the claims 1 to 16.
